(19) Europäisches Patentamt
European Patent Office
Office européen des brevets

(11) **EP 4 235 836 A1**

(12) **EUROPÄISCHE PATENTANMELDUNG**

(43) Veröffentlichungstag:
**30.08.2023   Patentblatt 2023/35**

(21) Anmeldenummer: **22158281.0**

(22) Anmeldetag: **23.02.2022**

(51) Internationale Patentklassifikation (IPC):
$H01M\ 4/06^{(2006.01)}$    $H01M\ 4/24^{(2006.01)}$
$H01M\ 4/38^{(2006.01)}$    $H01M\ 4/50^{(2010.01)}$
$H01M\ 4/62^{(2006.01)}$

(52) Gemeinsame Patentklassifikation (CPC):
**H01M 4/06; H01M 4/24; H01M 4/386; H01M 4/50; H01M 4/625**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder:
• **Evonik Operations GmbH**
  **45128 Essen (DE)**

• **Forschungszentrum Jülich GmbH**
  **52425 Jülich (DE)**

(72) Erfinder: **Die Erfindernennung liegt noch nicht vor**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **ELEKTROLYTZUSAMMENSETZUNG UND PRIMÄRZELLE ENTHALTEND DIE ELEKTROLYTZUSAMMENSETZUNG UND INSBESONDERE NANO-PARTIKULÄRE SILIZIUM-PARTIKEL**

(57) Gegenstand der Erfindung ist eine wässrige, alkalische Elektrolytzusammensetzung, die umfasst mindestens eine Hydroxycarbonsäure, Carboxylat einer Hydroxycarbonsäure, Ester einer Hydroxycarbonsäure, Ether eines Carboxylates einer Hydroxycarbonsäure, polymere Verbindung basierend auf mindestens einer Hydroxycarbonsäure oder Gemische enthaltend mindestens zwei der vorgenannten Verbindungen. Des Weiteren umfasst die Erfindung eine mehrzellige Batterie, die Verwendung als Elektrolyt in einer Primärzelle mit Silizium als Anodenmaterial in Form von Silizium-Partikeln, die als Silizium-Primärpartikel mit einer Partikelgröße zwischen 1 nm bis 3000 nm vorliegen. Wobei das Anodenmaterial im geladenen Zustand vorzugsweise kein Lithium umfasst und, wobei die Silizium-Primärpartikel optional im Wesentlichen amorph sind.

EP 4 235 836 A1

**Beschreibung**

Gegenstand der Erfindung ist eine wässrige, alkalische Elektrolytzusammensetzung, die umfasst eine Hydroxycarbonsäure, Carboxylat einer Hydroxycarbonsäure, Ester einer Hydroxycarbonsäure, Ether eines Carboxylates einer Hydroxycarbonsäure, polymere Verbindung basierend auf mindestens einer Hydroxycarbonsäure oder Gemische enthaltend mindestens zwei der vorgenannten Verbindungen. Des Weiteren umfasst die Erfindung eine mehrzellige Batterie, die Verwendung als Elektrolyt in einer Primärzelle mit Silizium als Anodenmaterial in Form von Silizium-Partikeln, die als Silizium-Primärpartikel mit einer Partikelgröße zwischen 1 nm bis 30 000 nm vorliegen. Wobei das Anodenmaterial im geladenen Zustand vorzugsweise kein Lithium umfasst und, wobei die Silizium-Primärpartikel optional kristallin und/oder amorph sind.

Aufgrund des zunehmenden Bedarfes an E-Mobility im Personennahverkehr durch Elektroautos, Elektrofahrräder sowie elektrisch betriebene Busse etc. als auch bei zunehmender dezentraler Stromgewinnung besteht ein enormer Bedarf an umweltverträglichen Batterien, deren Komponenten einerseits unbeschränkt verfügbar und andererseits unbeschränkt recyclebar, umweltverträglich und/oder weiter verwendbar sein sollen. Silizium ist ein auf der Erde unbegrenzt verfügbarer Rohstoff. Darüber hinaus müssen die Komponenten einer Batterie kostengünstig verfügbar sein.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Zudem sind übliche Silizium enthaltende Lithium-Ionen-Sekundärbatterien täglich weltweit im Einsatz.

Aufgabe der Erfindung war es die Leistungsfähigkeit und Lebensdauer einer Silizium enthaltenden galvanischen Zelle, insbesondere alkalischen galvanischen Zelle, zu verbessern. Ferner soll die Leistungsdichte einer solchen Silizium enthaltenden galvanischen Zelle verbessert werden und eine hohe Anfangsspannung einstellbar sein.

Des Weiteren bestand die Aufgabe eine Silizium enthaltende galvanische Zelle bereitzustellen, die vorzugsweise frei von Lithium ist, wobei vorzugsweise frei von Lithium bedeutet, dass der Gehalt an Lithium im geladenen Zustand weniger als 1 Gew.-% vorzugsweise unter 0,1 Gew.-% in der Gesamtzusammensetzung der Primärzelle beträgt, insbesondere umfassend die Anode, die Kathode und den Elektrolyten, vorzugsweise beträgt der Gehalt an Lithium im Elektrodenmaterial der Anode im geladenen Zustand unter 0,1 Gew.-%. Vorzugsweise soll die galvanische Zelle Edukte und Reaktionsprodukte aufweisen, die aus Recyclingprozessen der Silizium-Waferherstellung stammen, Nebenprodukte sind und/oder in Recyclingprozessen weiterverwendet werden können. Gelöst werden die Aufgaben mit dem Gegenstand des Anspruchs 1 sowie mit einer Primärzelle nach Anspruch 11, der mehrzelligen Batterie nach Anspruch 14 und der Verwendung nach Anspruch 15. In den Unteransprüchen sowie in der Beschreibung sind bevorzugte Ausführungsformen detaillierter dargestellt.

Gegenstand der Erfindung ist eine wässrige, alkalische Elektrolytzusammensetzung, enthaltend

- 2,0 bis 99,0 Gew.-% Wasser, und
- 0,0001 bis 15 Gew.-% mindestens eine Hydroxycarbonsäure, Carboxylat einer Hydroxycarbonsäure, Ester einer Hydroxycarbonsäure, Ether eines Carboxylats einer Hydroxycarbonsäure, polymere Verbindungen basierend auf Hydroxycarbonsäuren, Carboxylaten von Hydroxycarbonsäure, Estern von Hydroxycarbonsäuren oder Gemisch enthaltend mindestens zwei der vorgenannten Verbindungen, und
- einen Gehalt von 0,001 bis 40 Gew.-%, insbesondere 10 bis 40 Gew.-%, Alkalihydroxid in Bezug auf die Gesamtzusammensetzung von 100 Gew.-%.

Nach einer besonders bevorzugten Alternative ist Hydroxycarbonsäure ausgewählt aus Enantiomeren, Diastereomeren oder Gemischen dieser. Bevorzugt sind $\alpha$-Hydroxycarbonsäuren. Besonders bevorzugt ist Milchsäure, vorzugsweise D- und/oder L-Milchsäure sowie Gemische von D-/L-Milchsäure.

Bevorzugt umfasst die Elektrolytzusammensetzung mindestens ein Alkalihydroxid ausgewählt aus NaOH und KOH und optional weitere alkalisch lösliche Salze, wie beispielsweise Erdalkalihydroxide, basische Metalloxide oder organische Basen. Bevorzugt umfasst die Elektrolytzusammensetzung ein Alkalihydroxid ausgewählt aus KOH und NaOH.

Zur Herstellung der wässrigen Elektrolytzusammensetzung wird vorzugsweise destilliertes Wasser eingesetzt.

Nach einer besonders bevorzugten Alternative ist die Hydroxycarbonsäure ausgewählt aus Milchsäure, insbesondere D-Milchsäure, L-Milchsäure und/oder Gemische von D/L-Milchsäure, $\alpha$-Hydroxycarbonsäuren, insbesondere Fruchtsäuren, insbesondere Äpfelsäure, Citronensäure, Fumarsäure, Gluconsäure, Glycolsäure, Mandelsäure, Milchsäure, Oxalsäure, Salicylsäure, $\alpha$-Hydroxycaprylsäure und Weinsäure, $\beta$-Hydroxycarbonsäuren, insbesondere $\beta$-Hydroxybuttersäure und/oder Mevalonsäure, oder Gallussäure, 4-Hydroxybutansäure, Polyhydroxybuttersäure, Salicylsäure (2-Hydroxybenzoesäure), 4-Hydroxybenzoesäure (PHB) oder das Carboxylat von Hydroxycarbonsäure, Ester von Hydroxycarbonsäure, Ether von Carboxylat von Hydroxycarbonsäure auf mindestens einer der vorgenannten Hydroxysäuren basiert, und/oder die polymeren Verbindungen auf mindestens einer der Hydroxycarbonsäuren oder einem Gemisch enthaltend mindestens zwei der vorgenannten Verbindungen basiert.

Nach einer weiteren Alternative kann die Elektrolytzusammensetzung zusätzlich eine lineare oder verzweigte Polyalkylenoxid-Gruppen aufweisende Verbindung oder Gemische davon enthalten, wobei die Verbindung mindestens drei Alkylenoxid-Gruppen in der Verbindung aufweist, wobei die Alkylenoxid-Gruppen in der Polyalkylenoxid-Gruppen aufweisenden Verbindung ausgewählt sind aus Alkylenoxid-Gruppen mit 2 bis 6 C-Atomen je Alkylenoxid-Gruppe, und, wobei mindestens eine terminale Gruppe der Polyalkylenoxid-Gruppen aufweisenden Verbindung ausgewählt ist aus Hydroxy-Gruppen, Alkyl-Gruppen, Alkoxy-Gruppen, Alkenyl-Gruppen, Alkenyloxid-Gruppen, Carbonsäure-Gruppen, Carbonsäureester-Gruppen, insbesondere olefinischen Carbonsäureester-Gruppen, Carbonsäureamid-Gruppen, aromatischen-Gruppen, insbesondere Alkyl-substituierten aromatischen Gruppen, und/oder Gruppen enthaltend cyclische-Ether.

Nach einer Ausführungsform kann die Elektrolytzusammensetzung ein Gemisch von Hydroxycarbonsäure, Carboxylat einer Hydroxycarbonsäure, Ester einer Hydroxycarbonsäure, Ether eines Carboxylats einer Hydroxycarbonsäure, polymere Verbindungen basierend auf Hydroxycarbonsäuren, Carboxylaten von Hydroxycarbonsäure, Estern von Hydroxycarbonsäuren und mindestens einer linearen oder verzweigten Polyalkylenoxid-Gruppen aufweisende Verbindung aufweisen.

Besonders bevorzugt sind lineare oder verzweigte Polyalkylenoxid-Gruppen aufweisende Verbindung mit mindestens drei bis 200 Alkylenoxid-Gruppen in der Verbindung oder Gemische von mindestens zwei dieser Verbindungen, insbesondere mit 3 bis 100 Alkylenoxid-Gruppen, besonders bevorzugt mit drei bis 100 Alkylenoxid-Gruppen, weiter bevorzugt mit 3 bis 50 Alkylenoxid-Gruppen, vorzugsweise mit 3 bis 25 Alkylenoxid-Gruppen. Dabei ist es weiter bevorzugt, wenn die Alkylenoxid-Gruppen aus Ethylenoxid und Propylenoxid ausgewählt sind.

Dabei können die Alkyl-Gruppen, Alkoxy-Gruppen, Alkenyl-Gruppen, Alkenyloxid-Gruppen, Carbonsäure-Gruppen, Carbonsäureamid-Gruppen, Carbonsäureester-Gruppen, insbesondere olefinischen Carbonsäureester-Gruppen, bevorzugt sind Fettsäuren, aromatischen-Gruppen, insbesondere Alkyl-substituierten aromatischen Gruppen, und/oder Gruppen enthaltend cyclische-Ether als mindestens eine terminale Gruppe und als mindestens eine weitere terminale Gruppe jeweils unabhängig umfassen 1 bis 35 C-Atome, insbesondere 2 bis 25 C-Atome. Alkyl-, Alkoxy-, Alkenyl-, Alkenyloxid und aromatische Gruppen optional Alkyl-substituiert umfassen vorzugsweise jeweils unabhängig 1 bis 18 C-Atome. Carbonsäureester sind vorzugsweise ausgewählt aus natürlichen Fettsäuren mit 4 bis 20 C-Atomen.

Bevorzugte Polyalkylenoxid-Gruppen umfassen insbesondere Polyalkylenoxid-Gruppen aufweisende Verbindungen die vorzugsweise ein Molekulargewicht von 200 g/mol bis 35.000 g/mol, bevorzugt 200 bis 1500 g/mol aufweisen können. Dabei ist es weiter bevorzugt, wenn das mittlere Molekulargewicht von 200 g/mol bis 1500 g/mol beträgt.

Definitionsgemäß umfassen Polyalkylenoxid-Gruppen aufweisende Verbindung:

-(O-Alkylen)$_n$-OH, -(O-Alkylen)$_n$-COOH, -(O-Alkylen)$_n$-(C=O)NHR, -(O-Alkylen)$_n$-(C=O)NR$_2$, mit R = Kohlenwasserstoff oder Polyalkylenoxid,
-(O-Alkylen)$_n$-O-Alkyl, -(O-Alkylen)$_n$-O-Alkenyl,
-(O-Alkylen)$_n$-O-(C=O)-Alkyl, -(O-Alkylen)$_n$-O-(C=O)-Alkenyl,
-(O-Alkylen)$_n$-O-(C=O)-Aromat-Alkyl jeweils unabhängig mit n größer gleich 2, insbesondere mit n = 5 bis 100, insbesondere n = 5 bis 50, bevorzugt n = 5 bis 25.

Nach einer Ausführungsform können die Alkylenoxid-Gruppen in der Polyalkylenoxid-Gruppen aufweisenden Verbindung bevorzugt ausgewählt sein aus Alkylenoxid-Gruppen mit 2 bis 4 C-Atomen je Alkylenoxid-Gruppe. Des Weiteren ist es bevorzugt, wenn die Polyalkylenoxid-Gruppen aufweisenden Verbindungen mindestens fünf Alkylenoxid-Gruppen, insbesondere bis einhundert Alkylenoxid-Gruppen, mit 2 bis 4 C-Atomen je Alkylenoxid-Gruppe in der Verbindung aufweist.

Alkylen ist besonders bevorzugt bivalentes Ethylen (-CH$_2$CH$_2$-), insbesondere als Ethylenoxid-Gruppe, oder bivalentes Propylen, insbesondere in Propylenoxid-Gruppen (-CH$_2$(CH$_3$CH)- und -(CH$_2$)$_3$-).

Bevorzugte Beispiele können symmetrische Verbindungen umfassen, aber sind nicht beschränkt auf die nachfolgend genannten Polyalkylenoxid-Gruppen aufweisenden Verbindungen: H-(O-Alkylen)$_n$-OH, Alkyl-(O-Alkylen)$_n$-O-Alkyl, Alkenyl-(O-Alkylen)$_n$-O-Alkenyl, Alkyl-(C=O)-(O-Alkylen)$_n$-O-(C=O)-Alkyl, Alkenyl-(C=O)-(O-Alkylen)$_n$-O-(C=O)-Alkenyl, Alkyl-Aromat-(O-Alkylen)$_n$-O-(C=O)-Aromat-Alkyl, wobei n wie vorstehend definiert ist, vorzugsweise ist n größer gleich 2, bevorzugt ist n = 5 bis 50, insbesondere n = 5 bis 25, wobei jedes Alkylen jeweils unabhängig 2 bis 6 C-Atome umfasst und Alkyl und/oder Alkenyl jeweils unabhängig 1 bis 24 C-Atome umfassen, insbesondere 1 bis 20 C-Atome.

Bevorzugt sind die terminalen Gruppen der Polyalkylenoxid-Gruppen aufweisenden Verbindung ausgewählt aus Hydroxy-Gruppen, Alkyl-Gruppen, Alkoxy-Gruppen, Alkylen-Gruppen, Alkylenoxid-Gruppen, Carbonsäureester-Gruppen, insbesondere olefinische Carbonsäureester-Gruppen, aromatischen-Gruppen und/oder Gruppen enthaltend cyclische-Ether.

Nach einer bevorzugten Ausführungsform ist die mindestens eine terminale Gruppe der Polyalkylenoxid-Gruppen aufweisenden Verbindung eine Hydroxy-Gruppe und mindestens eine weitere terminale Gruppe ist ausgewählt aus Hydroxy-Gruppen, Alkyl-Gruppen, Alkoxy-Gruppen, Alkenyl-Gruppen, Alkenyloxid-Gruppen, Carbonsäureester-Gruppen, aromatischen-Gruppen, insbesondere Alkyl-substituierten aromatischen Gruppen, und/oder Gruppen enthaltend cyclische-Ether. Dabei ist es weiter bevorzugt, wenn die linearen Verbindungen eine erste terminale und eine weitere terminale Gruppe aufweisen und verzweigte Verbindungen eine erste, eine weitere terminale Gruppe und mindestens eine zusätzliche terminale Gruppe aufweisen.

Nach einer besonders bevorzugten Ausführungsform können die Elektrolytzusammensetzungen zusätzlich umfassen mindestens eine Polyalkylenoxid-Gruppen aufweisende Verbindung mit mindestens einer cyclischen Ether-Gruppe mit 5 bis 8 C-Atomen und optional als mindestens eine terminale Gruppe einen Carbonsäureester, insbesondere einen Carbonsäureester einer Fettsäure, und, wobei die mindestens eine oder mehrere weiteren terminalen Gruppen ausgewählt sind aus Hydroxy-Gruppen, Alkyl-Gruppen, Alkoxy-Gruppen, Alkenyl-Gruppen, Alkenyloxid-Gruppen, Carbonsäureester-Gruppen, aromatischen-Gruppen und/oder Gruppen enthaltend cyclische-Ether mit 5 bis 8 C-Atomen. Besonders bevorzugt ist eine verzweigte Polyalkylenoxid-Gruppen aufweisende Verbindung mit ein bis sechs Polyalkylenoxid-Gruppen an der cyclischen Ether-Gruppe, und mindestens einem Alkylenoxid-funktionalisierten Fettsäureester. Typische Fettsäuren umfassen Ölsäure, Laurinsäure, Stearinsäure, Isostearinsäure und/oder Palmitinsäure. Besonders bevorzugte Verbindungen umfassen ethoxylierte Sorbitanfettsäureester, insbesondere Mono- bis Triester. Bevorzugt mit 2 bis 200 Ethoxy-Gruppen, insbesondere mit 2 bis 50 Ethoxy-Gruppen, und optional mit Propoxy-Gruppe(n) als Polyalkylenoxid-Gruppen.

Nach einer weiteren bevorzugten Ausführungsform kann eine wässrige, alkalische Elektrolytzusammensetzung zusätzlich verzweigte Polyalkylenoxid-Gruppen aufweisende Verbindungen aufweisen, die umfassen Ether von Kohlenhydraten, insbesondere Ether von Furanosen oder Pyranosen, die optional Carbonsäureester von Fettsäure aufweisen. Besonders bevorzugt sind Polyalkylenoxid-Gruppen enthaltende Verbindungen von Sorbitan-Fettsäureester, wie Polyoxyethylen(20)sorbitanmonooleat (Tween 80). Gleichfalls geeignet können eine oder mehrere der folgenden Polysorbate in der Elektrolytzusammensetzung eingesetzt werden: Polysorbat 20 (Polyoxyethylen-(20)-sorbitanmonolaurat) (E 432), Polysorbat 21 (Polyoxyethylen-(4)-sorbitanmonolaurat), Polysorbat 40 (Polyoxyethylen-(20)-sorbitanmonopalmitat) (E 434), Polysorbat 60 (Polyoxyethylen-(20)-sorbitanmonostearat) (E 435), Polysorbat 61 (Polyoxyethylen-(4)-sorbitanmonostearat), Polysorbat 65 (Polyoxyethylen-(20)-sorbitantristearat) (E 436), Polysorbat 80 (Polyoxyethylen-(20)-sorbitanmonooleat) (E 433), Polysorbat 81 (Polyoxyethylen-(5)-sorbitanmonooleat), Polysorbat 85 (Polyoxyethylen-(20)-sorbitantrioleat), Polysorbat 120 (Polyoxyethylen-(20)-sorbitanmonoisostearat).

Besonders bevorzugte Elektrolytzusammensetzungen können umfassen Polyalkylenoxid-Gruppen aufweisende Verbindungen, die ausgewählt sind aus Polyethylenglycol, Polypropylenglycol, Propylenoxid und Ethylenoxid aufweisenden Polyalkylenoxid-Gruppen enthaltenden Verbindungen, wobei die terminalen Gruppen ausgewählt sind aus Hydroxy-Gruppen, Alkoxy-Gruppen, Alkyl-Gruppen, Alkenyl-Gruppen, Alkenyloxid-Gruppen, Alkyl-funktionellen Carbonsäureester-Gruppen, Alkylen-funktionellen Carbonsäure-Gruppen, wobei die Alkoxy, Alkyl und Alkylen-Gruppen jeweils unabhängig 1 bis 24 C-Atome aufweisen.

Weitere besonders bevorzugte Polyalkylenoxid-Gruppen aufweisende Verbindungen können ausgewählt sein aus Verbindungen enthaltend Polyalkylenoxid-Gruppen aufweisende Furanosen, und/oder Polyalkylenoxid-Gruppen aufweisende Pyranosen, insbesondere Polyalkylenoxid-Gruppen aufweisende Verbindungen von Furanose-Fettsäureestern und/oder Polyalkylenoxid-Gruppen aufweisende Verbindungen von Pyranose-Fettsäureestern. Insbesondere sind die terminalen Gruppen der Polyalkylenoxid-Gruppen aufweisenden Verbindung ausgewählt aus Hydroxy-Gruppen, Alkyl-Gruppen, Alkoxy-Gruppen, Alkylen-Gruppen, Alkylenoxid-Gruppen, Carbonsäureester-Gruppen, aromatischen-Gruppen und/oder Gruppen enthaltend cyclische-Ether.

Weiter bevorzugt sind Polyalkylenoxid-Gruppen aufweisende Verbindungen von Sorbitan-Fettsäureester umfassend Polyalkylenoxid-Gruppen aufweisende Verbindungen eines Sorbitanmonostearats, Sorbitantristearats, Sorbitanmonolaurats, Sorbitanmonooleats, Sorbitantrioleats und/oder Sorbitanmonopalmitats.

Entsprechend einer weiteren Ausführungsform ist es bevorzugt, wenn die Polyalkylenoxid-Gruppen aufweisende Verbindung umfasst mindestens eine cyclische Ether-Gruppe mit 5 bis 8 C-Atomen und optional als mindestens eine terminale Gruppe einen Carbonsäureester, insbesondere einer Fettsäure oder einer Fruchtsäure, bevorzugt einer Fettsäure, und, wobei die weiteren terminalen Gruppen ausgewählt sind aus Hydroxy-Gruppen, Alkyl-Gruppen, Alkoxy-Gruppen, Alkenyl-Gruppen, Alkenyloxid-Gruppen, Carbonsäureester-Gruppen, aromatischen-Gruppen, insbesondere Alkylfunktionalisierte Phenyl-Gruppen, und/oder Gruppen enthaltend cyclische-Ether mit 5 bis 8 C-Atomen.

Eine besonders bevorzugte Verbindung ist ausgewählt aus 4-(1,1,3,3-Tetramethyl-butyl)phenyl-polyethylenglycolen, bevorzugt 4-(1,1,3,3-Tetramethylbutyl)phenyl-polyethylen-glycol, t-Octylphenoxypolyethoxyethanol, Polyethylene glycol tert-octylphenyl ether, mit n gleich 5 bis 100, bevorzugt mit n = 9 bis 10 (Triton X-100) oder n = 7 bis 8 (Triton X-114).

Ebenso Gegenstand der Erfindung ist eine Elektrolytzusammensetzung umfassend 2,0 bis 99,0 Gew.-% Wasser und 0,0001 bis 15 Gew.-% mindestens einer Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen, bevorzugt sind 0,01 bis 10 Gew.-%, besonders bevorzugt von 0,1 bis 2,5 Gew.-%, und - einen Gehalt von 0,001 bis 40 Gew.-% Alkalihydroxid, insbesondere 10 bis 40 Gew.-%, und optional 0,0001 bis 15 Gew.-% Polyalkylenoxid-Gruppen aufweisende Verbindungen oder Gemische dieser, insbesondere 0,01 bis 2 Gew.-%,

in Bezug auf die Gesamtzusammensetzung von 100 Gew.-%. Optional kann die Elektrolytzusammensetzung Alkalisilikat enthalten, wobei der Gehalt vorzugsweise unter 4 Mol/Liter Alkalisilikat, bevorzugt von 0,001 bis 3,5 Mol/Liter Alkalisilikat beträgt, insbesondere in der Gesamtzusammensetzung von 100 Gew.-%.

Zur Herstellung der wässrigen Elektrolytzusammensetzung wird vorzugsweise destilliertes Wasser eingesetzt. Das Wasser zur Herstellung der Elektrolytzusammensetzung weist vorzugsweise bei 25 °C, eine Leitfähigkeit von größer gleich 0,055 $\mu$S/cm, weiter bevorzugt von größer gleich 0,5 $\mu$S/cm auf. In der Elektrolytzusammensetzung ist die Leitfähigkeit erheblich höher und liegt vorzugsweise bei größer gleich 1 mS/cm bei 25 °C, bevorzugt bei größer gleich 0,5 S/cm bei 25 °C.

Nach einer besonders bevorzugten Ausführungsform ist die Elektrolytzusammensetzung eine wässrige, alkalische Zusammensetzung umfassend Alkalihydroxid, insbesondere Kaliumhydroxid, und mindestens eine Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen,. Dabei ist es bevorzugt, wenn der Gehalt des Alkalihydroxids von 0,001 bis 6 Mol/Liter, vorzugsweise von 1 bis 5,5 Mol/Liter in der wässrigen, alkalischen Elektrolytzusammensetzung beträgt.

Der Gehalt an Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen kann von der gewählten Elektrodenoberfläche sowie weiteren Verfahrensbedingungen wie Temperatur, Durchflussmenge in der Zelle, Porengröße der Elektrodenoberfläche etc. abhängen. Daher kann der Gehalt der mindestens einen Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen oder Gemische von mindestens zwei dieser Verbindungen von 0,000001 bis 50.000 ppm-Gew., insbesondere von 0,01 bis 20.000 ppm-Gew., bevorzugt von 0,01 ppm-Gew. bis 10.000 ppm-Gew., in der Elektrolytzusammensetzung, insbesondere mit einer Gesamtzusammensetzung von 100 Gew.-% betragen.

Weiter ist es bevorzugt, wenn die Elektrolytzusammensetzung eine Stoffmengenkonzentration von 1 bis 6 Mol/Liter Alkalihydroxid, insbesondere Kaliumhydroxid, und 10 ppm-Gew. bis 50.000 ppm-Gew. lineare oder verzweigte Polyalkylenoxid-Gruppen aufweisende Verbindungen mit mindestens drei Alkylenoxid-Gruppen in der Verbindung oder Gemische von mindestens zwei dieser Verbindungen in Wasser aufweist, wobei insbesondere die Gesamtzusammensetzung der Elektrolytzusammensetzung 100 Gew.-% beträgt. Bevorzugt ist die Polyalkylenoxid-Gruppen enthaltende Verbindung ausgewählt aus Polyethylenoxid-Gruppen, Polypropylenoxid-Gruppen, Polypropylenoxid- und Polyethylenoxid-Gruppen enthaltenden Verbindungen. In einer Alternative weist die Polyalkylenoxid-Gruppen aufweisende Verbindung mindestens einen cyclischen Ether auf.

Gleichfalls Gegenstand der Erfindung ist eine chemische Primärzelle aufweisend eine Anode, eine Kathode, einen Elektrolyten sowie mindestens einen Separator, wobei der Separator die Kathode und die Anode voneinander separiert, und die Kathode umfasst als Material Mangandioxid und optional Kohlenstoff enthaltenden Leitfähigkeitsvermittler, wobei die Anode als Anodenmaterial Silizium umfasst, und wobei das Silizium in Form von Silizium-Partikeln vorliegt. Die Silizium-Primärpartikel weisen vorzugsweise eine Partikelgröße zwischen 1 nm bis 30 000 nm auf. Nach einer Alternative sind die Silizium-partikel kristallin, insbesondere sind die Siliziumpartikel polykristallin. Nach einer weiteren Alternative sind die Siliziumpartikel im Wesentlichen röntgenamorph. Ferner können Gemische von Siliziumpartikeln umfassend amorphe und kristalline Siliziumpartikel als Anodenmaterial eingesetzt werden.

Somit ist Gegenstand der Erfindung eine elektrochemische Primärzelle aufweisend eine Anode, eine Kathode sowie mindestens einen Separator und enthaltend eine erfindungsgemäße Elektrolytlösung, wobei der Separator die Kathode und die Anode voneinander separiert.

Nach einer bevorzugten Ausführungsform kann die Primärzelle mit einem hermetisch abgeschlossenen Gehäuse vorliegen, wobei i) das Material der Kathode der Primärzelle Mangandioxid und optional einen Kohlenstoff enthaltenden Leitfähigkeitsvermittler aufweist. Als ein hermetisch abgeschlossenes Gehäuse wird in der Regel ein Gehäuse verstanden, dass aus einem gegenüber alkalischen Elektrolyten inertem Material hergestellt ist und hermetisch, insbesondere fluiddicht (gas- und flüssigkeitsdicht) abgeschlossen ist. Als Material für das Gehäuse oder auch für den Separator kommen beispielsweise Polyetheretherketone, Polyaryletherketone, Polyphenylensulfid (PPS), Polyoxymethylen-Copolymere(POM-C), Polyamid, Cycloolefine oder andere Hyperformance Kunststoffe oder auch metallische Legierungen in Frage. Die Komponenten des Gehäuses können mittels Laser verschweißt oder mittels Plasmaverfahren verschweißt sein. Die Kathode kann als Kohlenstoff geträgertes MnO$_2$ ausgeführt sein.

Der Separator kann mit einer Shut-down-Funktion ausgelegt sein, um einen Zutritt des Elektrolyten bei unerwünschten Verfahrensbedingungen von der Anode und/oder der Kathode zu unterbinden. Gleichfalls kann die Primärzelle eine Berstplatte aufweisen, um bei unerwünschtem Druckanstieg eine Explosion der Primärzelle zu vermeiden und den gezielten Austritt der Komponenten aus der Primärzelle bei Druckanstieg zu steuern.

Nach einer zweiten Alternative kann die Primärzelle als die Kathode ii) eine Luftkathode aufweisen. Das Material der Kathode in dieser Primärzelle umfasst vorzugsweise Mangandioxid und optional einen Kohlenstoff enthaltenden Leitfähigkeitsvermittler, insbesondere weist die Luftkathode eine für Kohlendioxid-undurchlässige Membran auf, die vorzugsweise in der Primärzelle so angeordnet ist, dass sie den Zutritt von Kohlendioxid aus der Umgebungsluft an die Kathode verhindert.

Ferner ist Gegenstand der Erfindung eine Primärzelle in der die Anode als Anodenmaterial Silizium umfasst, insbesondere wobei das Silizium in Form von Silizium-Partikeln vorliegt, und bevorzugt die Silizium-Primärpartikel eine Partikelgröße zwischen 1 nm bis 30 000 nm aufweisen. Die Siliziumpartikel können ausgewählt sein aus kristallinen, insbesondere polykristallin, und/oder amorphen Siliziumpartikeln. Nach einer bevorzugten Ausführungsform können Sägereste aus der Silizium-Waferherstellung, wie Wafern zur Herstellung von Halbleiter oder auch Reste aus der Herstellung von Solarsilizium-Wafern eingesetzt werden die vorzugsweise eine bimodale Partikelverteilung aufweisen mit Maxima beispielsweise bei 1 000 und 10 000 nm. XRD-Analysen der polykristallinen Siliziumpartikel unter Verwendung der Scherrer-Gleichung ergeben sich Kristallitgrößen größer gleich von 12 nm. Alternativ sind die Silizium-Primärpartikel im Wesentlichen amorph.

Vorzugsweise können die Silizium-Partikel in Form von Agglomeraten von Silizium-Primärpartikeln, Aggregaten von Silizium-Primärpartikeln oder Gemischen dieser Agglomerate und Aggregate, wobei die Agglomerate und/oder Aggregate eine Größe von 100 bis 30 000 nm aufweisen. Die Primärpartikel können Partikel mit einer Primärpartikelgröße von 10 bis 90 nm aufweisen.

Ferner ist Gegenstand der Erfindung eine mehrzellige Batterie, wobei die Batterie mindestens zwei bis 15.000 mit einander verbundene Primärzellen umfasst, vorzugsweise sind die zwei bis 1.000 miteinander verbundenen Primärzellen in Serie geschaltet.

Ebenso Gegenstand der Erfindung ist die Verwendung mindestens einer Hydroxycarbonsäure, Carboxylate der Hydroxycarbonsäure, Ester der Hydroxycarbonsäure, Ether der Carboxylate der Hydroxycarbonsäure, polymere Verbindung basierend auf Hydroxycarbonsäure oder Gemische enthaltend mindestens zwei der vorgenannten Verbindungen als Additiv in einer Elektrolytzusammensetzung, insbesondere in einer wässrigen, alkalischen Elektrolytzusammensetzung, in einer elektrochemischen Primärzelle, insbesondere wobei die Anode der Primärzelle Silizium enthält das in Form von Silizium-Partikeln mit einer Partikelgröße zwischen 1 nm bis 30 000 nm vorliegt. Dabei ist es bevorzugt, wenn in der Primärzelle als Anode Silizium in Form von kristallinen, wie polykristallinen, und/oder amorphen Silizium-Partikeln aufweist. Besonders bevorzugt sind Silizium-Primärpartikel, insbesondere röntgenamorphe Primärpartikel, mit einer Partikelgröße zwischen 1 nm bis 30 000 nm, die vorzugsweise als Aggregate vorliegen.

Überraschenderweise haben die Erfinder gefunden, dass spezifische Silizium-Partikel als aktive Komponente in einer galvanischen Zelle verwendet werden können und in einer einzelnen spezifischen elektrochemischen Primärzelle nennenswerte Leistungsdichten bis unerwartet hohe Leistungsdichten von größer gleich 0,5 mW/cm$^2$ erzielt werden können. In allen Versuchen konnte mit Elektroruß oder elektrochemisch behandeltem bzw. hergestelltem Ruß und Leitruß die besten Leistungsdichten für Silizium enthaltende Primärzellen mit größer 3 mW/cm$^2$ erhalten werden.

Unter agglomerierten Silizium-Primärpartikeln oder Agglomeraten von Silizium werden erfindungsgemäß Silizium-Primärpartikel verstanden, die sich im Wesentlichen an Ecken und Kanten berühren und nicht an den Flächen. Agglomerate können beim Dispergieren in Aggregate und die Silizium-Primärpartikel zerkleinert werden. Des Weiteren werden unter Aggregaten zusammengewachsene, aneinander geschmolzene oder zusammengelagerte Primärpartikel verstanden, die nur unter mechanischer Krafteinwirkung voneinander getrennt werden können.

Des Weiteren soll ein wirtschaftliches Kathodenmaterial bereitgestellt werden, das vorzugsweise eine physikalische Mischung von Mangandioxid (MnO$_2$) und einem Leitfähigkeitsvermittler umfasst. Der optionale Gehalt des Leitfähigkeitsvermittlers in den Elektroden der Primärzelle kann in der Kathode und in der Anode unterschiedlich hoch sein. Für Mangandioxid ist ein Gehalt an Leitfähigkeitsvermittler im Material der Kathode von circa 5 bis 65 Gew.-%, bevorzugt 5 bis 15 Gew.-% üblich. Generell kann der Gehalt des Leitfähigkeitsvermittlers von 5 bis 60 Gew.-% im Material der Kathode betragen. Alternativ bevorzugt können Gehalte im Bereich von 15 bis 20 Gew.-% für einen geringeren Widerstand oder auch als Obergrenze 30 bis 60 Gew.-% sein. Dabei beträgt das Material der Kathode in Summe immer 100 Gew.-%.

Gegenstand der Erfindung ist somit mindestens eine elektrochemische Primärzelle, welche eine Anode, eine Kathode, einen Elektrolyten sowie mindestens einen Separator aufweist, wobei der Separator die Kathode und die Anode voneinander separiert, und die Kathode umfasst als Material Mangandioxid und optional einen Kohlenstoff enthaltenden Leitfähigkeitsvermittler, wobei die Anode als Anodenmaterial Silizium umfasst und, wobei das Silizium in Form von Silizium-Partikeln vorliegt und dabei die Silizium-Primärpartikel eine Partikelgröße zwischen 1 nm bis 30 000 nm aufweisen, und die Primärpartikel optional im Wesentlichen amorph sind. Dabei ist es besonders bevorzugt wenn die Silizium-Partikel, und insbesondere die Silizium-Primärpartikel eine Kristallinität von kleiner gleich 20 %, insbesondere 12 % aufweisen, insbesondere eine Kristallinität kleiner gleich 2 % aufweisen. Silizium-Primärpartikel mit einer Kristallinität unter 12 %, vorzugsweise unter 2 % gelten als amorph.

Vorzugsweise liegen die Silizium-Partikel in der Anode als Aggregate vor und optional ist der Gehalt an Lithium kleiner gleich 1 Gew.-% in Bezug auf den Siliziumgehalt der Anode von 100 Gew.-% der Primärzelle, wobei der Gehalt an Lithium bevorzugt im geladenen Zustand der Primärzelle kleiner gleich 0.1 Gew.-% beträgt.

Als im Wesentlichen amorph gilt ein Pulver, das röntgenamorph ist. Als röntgenamorph gilt vorzugsweise ein Pulver mit einer Kristallinität kleiner 20 %, bevorzugt kleiner 12 %, besonders bevorzugt kleiner gleich 2 %. Der Kristallinitätsgrad kann nach folgender Methode mittels XRPD ermittelt werden über die Formel % Kristallinität = $(100 \times A)/(A + B - C)$ mit A = gesamte Peakfläche der Reflexe der kristallinen Bestandteile des Diffraktogramms; B = gesamte Fläche unterhalb der Peakfläche A; C = luftstreuend-, fluoreszierend- und gerätebedingte Untergrundfläche. Gesamte Peakfläche A mit Untergrund genau unterhalb der schmalen Reflexe der Si-Phase. Die Untergrundfläche C wurde anhand der XRD-Diagramme des Si-Referenzstandards NIST 640 (Si-Standard = 100 % Kristallinität) ermittelt. Fläche B entspricht einem eingelegten Untergrundverlauf sowie dem konstanten Untergrund C. Berechnung (HighScore Plus Software). Si-Standard (Standard Reference Material 640d for X-Ray Metrology, David R. Black, Donald Windover, Albert Henins, David Gil, James Filliben and James P. Cline; National Institute of Standards and Technology, Gaithersburg, MD, 20899). In röntgenamorphen Pulvern gibt es im XRPD keine scharfen, sondern nur wenige diffuse Interferenzen bei kleinen Beugungswinkeln. Stoffe mit einem derartigen Röntgenbeugungsdiagramm bezeichnet man als *röntgenamorph*. Kristallin: Kristall ist ein anisotroper, homogener Körper, der eine dreidimensional periodische Anordnung der Bausteine besitzt und ein XRPD mit klar definierten auflösbaren Reflexen besitzt.

Gleichfalls Gegenstand der Erfindung sind Primärzellen, in denen das Anodenmaterial Silizium-Partikel umfassend Silizium-Primärpartikel, Agglomerate aus Silizium-Primärpartikeln, Aggregate aus Silizium-Primärpartikeln und/oder Gemische davon umfasst, wobei insbesondere die Agglomerate und/oder Aggregate eine Größe von 10 nm bis 100 $\mu$m (Mikrometer) aufweisen. Bevorzugt sind Agglomerate und/oder Aggregate im Bereich von 100 nm bis 5 Mikrometer, insbesondere von 200 nm bis 2 Mikrometer, bevorzugt von 300 nm bis 1,5 Mikrometer und/oder von 400 nm bis 1 Mikrometer. Zugleich können die Silizium-Primärpartikel eine Partikelgrößenverteilung von 1 nm bis 1500 nm, insbesondere von 50 bis 300 nm oder von 100 nm bis 300 nm aufweisen.

Batterieseparatoren in einer Alkali-Batteriezelle werden zum Trennen einer negativen Elektrode von einer positiven Elektrode verwendet, wenn sie in einem geeigneten Elektrolyten angeordnet sind. Neben der Trennung der Elektroden weist der Separator während des Betriebs der Zelle, wenn die normalen chemischen Reaktionen ablaufen, einen verhältnismäßig niedrigen Widerstand gegenüber der Elektrolytionenübertragung, jedoch einen beträchtlich hohen Widerstand gegenüber der Elektrodenionenübertragung auf.

Der Separator wird beispielsweise gebildet durch Aufbringen eines verbesserten Coatings. Bei dem Separator handelt es sich in der Regel um ein flexibles, faseriges und poröses Substrat, das gegen starkes Alkali und gegen Oxidation beständig ist. Der Separator kann ein Composite sein und kann vorzugsweise auf mindestens einem Polymer, wie Polyethylen, Polypropylen, Polyacrylat, PEEK (Polyetheretherketon), PEAK (Polyetheraryletherketon), PEEK/PEDEK (Polyetheretherketon, Polyetherdiphenyletherketon), Lingnocellulose, Cellulose und/oder Mikrozellulose basieren.

Ferner ist es bevorzugt, dass das Anodenmaterial Silizium-Partikel sowie Leitfähigkeits-vermittler umfasst, insbesondere umfasst der Leitfähigkeitsvermittler Kohlenstoff enthaltende Partikel oder eine Kohlenstoff enthaltende Paste, wie elektrisch leitfähige organische Polymere. Ein besonders bevorzugtes Anodenmaterial der Anode umfasst zu 10 bis 100,00 Gew.-%, insbesondere von 5 bis 90 Gew.-%, bevorzugt von 10 bis 95 Gew.-% Silizium-Partikel und einen Kohlenstoff enthaltenden Leitfähigkeitsvermittler, insbesondere von 5 bis 90 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm.

Bevorzugt ist ebenfalls ein Anodenmaterial der Anode umfassend zu 20 bis 75 Gew.-%, vorzugsweise von 20 bis 60 Gew.-%, Silizium-Partikel und einen Kohlenstoff enthaltenden Leitfähigkeitsvermittler, insbesondere von 25 bis 80 Gew.-%, bevorzugt von 40 bis 80 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm. Ein besonders bevorzugtes Anodenmaterial der Anode umfasst zu 45 bis 55 Gew.-% Silizium-Partikel und zu 55 bis 45 Gew.-% einen Kohlenstoff enthaltenden Leitfähigkeitsvermittler, wobei die Gesamtzusammensetzung des Anodenmaterials 100 Gew.-%, d.h. ohne Elektrolyt und/oder getrocknet, beträgt.

Entsprechend zwei alternativen besonders bevorzugten Ausführungsformen umfasst die Kathode der Primärzelle a) als Material Mangandioxid als Kathodenmaterial, oder b) die Kathode der Primärzelle ist eine Luftkathode und die Kathode umfasst Manganoxid, insbesondere Manganoxid und Mangandioxid, Platin, Platin-Basis, Nickel-Kobalt-Cyanide, oder Silber als Katalysator im Kathodenmaterial.

Nickel-Kobalt-Cyanide stehen beispielhaft für die Klasse von Nichtedelmetallkatalysatoren mit hervorragender Elektroaktivität für die Sauerstoffreduktionsreaktion im neutralen Elektrolyten. Die Zubereitung der Ni/Co-dotierten C-N-Hohl-Nanoröhren-Verbundkatalysatoren (C-N, Co/C-N, Ni/C-N und Ni-Co/C-N) erfolgt durch eine einfache Pyrolyse des Ni/Co-Salz~Dicyandiamid~Glucose~Gemenges. Eine entsprechende Silizium-Luft-Batterie wurde in einem neutralen Medium unter Verwendung der vorbereiteten Probe als Katalysator für die Luftelektrode montiert und zeigte eine hervorragende Entladungsleistung und Stabilität.

Die Kathode umfasst vorzugsweise als Material, d.h. als Kathodenmaterial oder als Katalysator im Kathodenmaterial zur Beschleunigung der Löslichkeit von Sauerstoff, Mangandioxid. Ein bevorzugtes Kathodenmaterial für eine Kathode in einer Primärzelle mit Luftkathode umfasst vorzugsweise Manganoxid, insbesondere Manganoxid und/oder Mangandioxid, und Silber als Katalysator. Ein besonders bevorzugtes Kathodenmaterial, insbesondere für eine Primärzelle mit Luftkathode, weist eine hydrophobe Kathode auf, deren Kathodenmaterial eine Mischung aus Mangan(di)oxid, vorzugsweise einer durchschnittlichen Partikelgröße von kleiner gleich 10 μm (Mikrometer), insbesondere elektrolytisches Gamma-Mangandioxid, einen Leitfähigkeitsvermittler und einen polymeren halogenierten Kohlenwasserstoff, insbesondere einen polymeren fluorierten Kohlenwasserstoff, umfasst, insbesondere einen Polytetrafluorethylen. Die Mischung kann in Platten gepresst, getrocknet werden. Dabei wird vorzugsweise in der Primärzelle auf die der Luft ausgesetzten Kathodenseite ein mikroporöser, hydrophober Film, beispielsweise aus einem polymeren fluorierten Kohlenwasserstoff, aufgebracht.

Ein besonders bevorzugtes Kathodenmaterial, insbesondere der Kathode in einer hermetisch geschlossenen Primärzelle, umfasst zu 75 bis 85 Gew.-% Mangandioxid und zu 15 bis 25 Gew.-% einen Kohlenstoff enthaltenden Leitfähigkeitsvermittler, wobei die Gesamtzusammensetzung des Kathodenmaterials 100 Gew.-% (Kathodenmaterial ohne Elektrolyt und/oder getrocknet) beträgt.

Der Kohlenstoff enthaltende Leitfähigkeitsvermittler umfasst vorzugsweise Kohlenstoff enthaltende Partikel, besonders bevorzugt Graphen enthaltende Partikel. Die Kohlenstoffpartikel weisen vorzugsweise eine Partikelgrößenverteilung im Bereich von 0,1 nm bis 5 Mikrometer, bevorzugt von 5 nm bis 5 Mikrometer auf. Dabei ist es weiter bevorzugt, wenn die Kohlenstoffpartikel eine Partikelgröße im Bereich von 5 nm bis 300 nm, insbesondere von 10 nm bis 150 nm, besonders bevorzugt von 20 bis 100 nm aufweisen und optional als Agglomerate einer Größe von 100 nm bis 3 Mikrometer, vorzugsweise einer Größe von 300 nm bis 2 Mikrometer vorliegen.

Entsprechend einer bevorzugten Ausführungsvariante umfasst das Silizium, insbesondere die Silizium-Partikel, bevorzugt die amorphen Silizium-Partikel, des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als Elektronen-Donatoren werden Elemente der 15. Hauptgruppe (neue Nomenklatur: Gruppe 15 des Periodensystems) eingesetzt.

Nach einer Ausführungsform umfasst das Silizium, insbesondere die Silizium-Partikel des Anodenmaterials, Dotierstoffe, wobei die Dotierstoffe zu größer gleich 1 Element der 15. Hauptgruppe auf $10^6$ Silizium-Atome und/oder größer gleich 1 Element der 13. Hauptgruppe auf $10^6$ Silizium-Atome vorliegen, insbesondere größer gleich 1 Element der 15. Hauptgruppe auf $10^4$ Silizium-Atome und/oder größer gleich 1 Element der 13. Hauptgruppe auf $10^4$ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detector gemäß Quelle:https://assets.thermofisher.com/TFS-Assets/CMD/brocu res/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativen, bevorzugten Ausführungsform umfasst das Silizium, insbesondere die amorphen Silizium-Partikel, des Anodenmaterials Dotierstoffe, wobei die Dotierstoffe größer gleich $10^4$ Atome (ca. 100 Gew.-ppm, abhängig von Atomgewicht des Dotierstoffes) der 15. Hauptgruppe auf $10^6$ Silizium-Atome und/oder größer gleich $10^4$ Atome der 13. Hauptgruppe auf $10^6$ Silizium-Atome vorliegen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich $2 \cdot 10^4$ Atome der 15. Hauptgruppe auf $10^6$ Silizium-Atome größer gleich $2 \cdot 10^4$ Atome der 13. Hauptgruppe auf $10^6$ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt. Entsprechend weiteren bevorzugten, alternativen Ausführungsformen umfasst das Silizium, insbesondere die amorphen Silizium-Partikel, des Anodenmaterials Dotierstoffe, wobei die Dotierstoffe größer gleich $10^5$ Atome der 15. Hauptgruppe auf $10^6$ Silizium-Atome und/oder größer gleich $10^5$ Atome der 13. Hauptgruppe auf $10^6$ Silizium-Atome betragen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich $10^{19}$ Atome der 15. Hauptgruppe auf $10^6$ Silizium-Atome und/oder größer gleich $10^5$ Atome der 13. Hauptgruppe auf $10^6$ Silizium-Atome umfassen.

Die Silizium-Partikel können auf atomarer Ebene eine Legierung von Silizium mit mindestens einem Element der 13. oder 15 Hauptgruppe aufweisen, wobei das mindestens eine Element der 13. oder 15. Hauptgruppe mit größer gleich $10^{21}$ Atomen/cm³ ausgewählt aus mindestens einem Elektronendonator und Elektronenakzeptor vorliegt. Dabei liegt die Legierung von Silizium auf atomarer Ebene mit mindestens einem Element der 13. oder 15. Hauptgruppe als eine amorphe oder kristalline Phase vor. Besonders bevorzugt weisen die Siliziumpartikel einen Gehalt an Bor von 10 ppm-Gew bis 2,5 Gew.-% in Bezug auf den Gesamtgehalt von 100 Gew.-% des Siliziumpartikels auf, bevorzugt ist ein Gehalt von 10 ppm-Gew bis 1,8, besonders bevorzugt von 1,8 Gew.-% plus/minus 0,2 Gew.-%. Analog kann die Siliziumfolie einen Gehalt an Bor von 10 ppm-Gew bis 1,8 Gew.-% in Bezug auf den Gesamtgehalt von 100 Gew.-% der Siliziumfolie aufweisen.

Gegenstand der Erfind ist eine Primärzelle umfassend Silizium-Partikel, die einen Gehalt an Bor von 10 Gew.-ppm bis 1,8 Gew.-% aufweisen.

Zur Herstellung einer Anode oder Kathode werden jeweils ein Leitfähigkeitsvermittler sowie Silizium-Partikel zur Herstellung der Anode und Mangandioxid zur Herstellung der Kathode und optional ein Bindemittel, wie ein polymerer fluorierter Kohlenwasserstoff, gemischt und optional getrocknet. Vorzugsweise wird eine homogene Partikelgröße von kleiner gleich 10 Mikrometer bis 5 nm eingestellt und die Mischung zu einer Anode(nplatte) oder Kathode(nplatte) verpresst.

Nach einer weiteren Alternative weist die Primärzelle an der Luftkathode einen Lufteinlass auf, der eine Gas durchlässige Membran sein kann. Bevorzugt ist eine Membran aus einem inerten Polymer, bevorzugt aus einem Polyfluorpolyethylen, Polyfluorpolypropylen oder Co-Polymeren davon. Der Aufbau der Luftkathode ist in der Regel eine Sandwichbauweise umfassend eine Gas durchlässige Membran, ein metallisches Netz zur Stromleitung und mindestens einen Katalysator, insbesondere einen porösen Katalysator. Die Gas durchlässige Membran ist vorzugsweise für Kohlendioxid undurchlässig und für Sauerstoff und optional Stickstoff durchlässig.

Nach einer weiteren Ausführungsform ist es bevorzugt, wenn die Primärpartikel der Silizium-Partikel Agglomerate und/oder Aggregate oder Gemische davon bilden und vorzugsweise in einem porösen Silizium-Netzwerk angeordnet sein können, insbesondere können die Agglomerate, Aggregate oder Gemische dieser mechanisch zu einem porösen Silizium-Netzwerk verhakt sein. Insoweit kann das Anodenmaterial besonders bevorzugt ein poröses Silizium-Netzwerk aus Silizium-Primärpartikeln, Agglomeraten aus Silizium-Primärpartikeln, Aggregaten aus Silizium-Primärpartikeln und/oder Gemischen davon sein.

Dabei ist es besonders bevorzugt, wenn die Silizium-Partikel, insbesondere die Silizium-Primärpartikel, im Wesentlichen amorph (röntgenamorph) sind, da auf diese Weise sichergestellt wird, dass in dem Elektrolyten eine gleichmäßige Auflösung der Silizium-Partikel gewährleistet ist. Bei im Wesentlichen kristallinem Silizium würde die Auflösung im Elektrolyten anisotrop erfolgen. Amorphes Silizium wird isotrop aufgelöst, so dass amorphes Silizium eine höhere Energiedichte liefern kann. Beispielsweise ist in alkalischen Ätzmitteln die Ätzrate für die (111)-Richtungen eines Siliziumkristalls ungefähr zwei Größenordnungen kleiner als die jeder anderen Richtung. Die (100)-orientierten Flächen des Siliziumkristalls werden anderthalb mal so schnell geätzt wie die (110)-orientierten Flächen. Gleichfalls können dotierte, amorphe Silizium-Partikel eingesetzt werden. Ist die Dotierung von p-Typ Silizium-Partikeln größer als > $10^{19}$ je cm³, wird die Ätzrate herabgesetzt, da gilt, je höher die Dotierrate desto geringer die Ätzrate. Insofern ist über die Dotierung in amorphen Silizium-Partikeln die Leistungsdichte auch über die Ätzrate einstellbar.

Unter amorphen Silizium-Primärpartikeln werden Silizium-Primärpartikel, in der Regel in Form eines Pulvers oder in einer festen Zusammensetzung verstanden, die (Silizium-Primärpartikel) röntgenamorph vorliegend und welche optional partikulärdispers in eine Hilfsstoffmatrix z.B. Ruß eingebettet sein können. Dabei bedeutet Röntgenamorph, dass dem Röntgensignal" entsprechend den Haupt-Peaks: 28.5° (111) 47.4°(220) 56.0° (311) 69.4° (400) maximal weniger als 10% der Signalamplituden bezogen auf die fcc Structure des Siliziums (JCPDS card: 00-027-1402) erreichen.

Erfindungsgemäßes Anodenmaterial umfasst keine Silicide. Unter Siliciden werden intermetallische Verbindungen mit einem stöchiometrischen Anteil an mindestens einem zweiten Metall verstanden. Silicide weisen eine homogene chemische Verbindung aus zwei oder mehr Metallen mit Gitterstrukturen, die sich von denen der konstituierenden Metalle unterscheiden, auf. Des Weiteren weist das Anodenmaterial keine klassische Legierung aus mindestens zwei Elementen auf, die gemeinsam das metalltypische Merkmal des kristallinen Aufbaus mit Metallbindung aufweisen, da die Silizium-Partikel vorzugsweise im Wesentlichen amorph (röntgenamorph) sind.

Die erfindungsgemäße elektrochemische Primärzelle ist keine Lithium-Ionen Batterie. Des Weiteren umfasst das Anodenmaterial keine Lithium-Interkalationsverbindung. Erfindungsgemäß umfasst das Kathodenmaterial kein Lithium-Metalloxid. Ebenso kann die Primärzelle insgesamt Lithium nur in geringen Mengen umfassen.

Die Silizium-Partikel können auf atomarer Ebene eine Legierung von Silizium mit mindestens einem Element der 13. oder 15 Hauptgruppe aufweisen, wobei das mindestens eine Element der 13. oder 15. Hauptgruppe mit größer gleich $10^{21}$ Atomen/cm³ ausgewählt aus mindestens einem Elektronendonator und Elektronenakzeptor vorliegt. Dabei liegt die Legierung von Silizium auf atomarer Ebene mit mindestens einem Element der 13. oder 15. Hauptgruppe als eine amorphe Phase vor.

Entsprechend einer Ausführungsform weisen die Silizium-Primärpartikel im Wesentlichen eine Partikelgröße von 5 bis 500 nm auf, insbesondere von 5 bis 20 nm, vorzugsweise von 5 bis 15 nm, oder in ebenso bevorzugten Alternativen weisen die Silizium-Primärpartikel Partikelgrößen von 20 bis 200 nm oder von 70 bis 350 nm, insbesondere von 100 bis 300 nm auf.

Ferner ist es bevorzugt, wenn die Silizium-Primärpartikel in Form von Agglomeraten und/oder Aggregaten aus den Primärpartikeln vorliegen, wobei die Agglomerate und/oder Aggregate eine Partikelgröße von 100 nm bis 30 $\mu$m aufweisen, insbesondere von 100 nm bis 2000 nm, bevorzugt von 150 bis 1000 nm oder von 400 bis 1000 nm. Die vorgenannten Anordnungen können auch als Nanodrähte oder Nanonetzwerk angesehen werden. In einer weiteren Alternative liegen die Silizium-Partikel im Wesentlichen in Form von Agglomeraten von Silizium Primärpartikeln und/oder Aggregaten von Silizium-Primärpartikeln oder Gemischen dieser vor, wobei die Agglomerate und/oder Aggregate eine Größe von 100 bis 30.000 nm aufweisen, insbesondere von 100 bis 2500 nm, vorzugsweise von 100 nm bis 1500 nm, weiter bevorzugt sind 150 bis 1000 nm, 400 bis 1000 nm oder 200 bis 3000 nm.

Die erfindungsgemäßen Silizium-Primärpartikel weisen vorzugsweise eine Oberfläche von 0,001 bis 500 $m^2/g$, vorzugsweise von 0,1 bis 300 $m^2/g$, vorzugsweise 0,1 bis 100 $m^2/g$ auf, insbesondere von 10 - 300 $m^2/g$, vorzugsweise mit einer Primärpartikel-größe von etwa 10 nm im Mittel mit plus/minus 9 nm. Des Weiteren beträgt vorzugsweise die Oberfläche der Agglomerate und/oder Aggregate von 10 bis 80 $m^2/g$.

Bevorzugt beträgt die Packungsdichte der Siliziumpartikel als Pulverschüttung 10 bis 50 g/l, insbesondere entlüftet um 100 g/l. Liegen die Siliziumpartikel als 3D-Formkörper gesintert vor, kann die Packungsdicht von 700 g/l bis 1500 g/l betragen. Bei dichtgesinterten Siliziumpartikeln kann die Packungsdichte zwischen 1,5kg/l und 2,3 kg/l betragen.

Liegt Silizium mit einer Schichtdicke von größer 0,1 Mikrometer vor, ist es weiter bevorzugt, wenn das Silizium in Form einer beschichteten Folie vorliegt, beispielsweise als Bandmaterial angelehnt an technisch vorhandenes Material aus Druckprozessen. Das Bandmaterial der Folie kann auf Zielformate, wie A5 zugeschnitten werden.

Die Kathode und/oder die Anode weisen vorzugsweise eine Porosität auf, die über Dichtemessung bestimmt wird. Vorzugsweise beträgt die Porosität der Kathode und/oder der Anode zwischen 18 und 35 Vol.-% in Bezug auf das Gesamtvolumen der jeweiligen Elektrode von jeweils 100 Vol.-%, bevorzugt von 24 bis 28 Vol.-%, besonders bevorzugt von 25 Vol.-% bis 27 Vol.-%. Die Porosität ist der Zwischenraum in der Anode und/oder der Kathode, der für den fluiden Elektrolyten verfügbar ist. Die Porosität wird ausgedrückt als prozentuales Volumen des geometrischen Gesamtvolumens der Kathode oder der Anode. Somit können die über die Porosität gebildeten Zwischenräume teilweise oder vollständig mit Elektrolyt gefüllt sein.

Porosität der Silizium-Anode (Volumendichte Anodenmaterial): bei Reinsilizium mit einer Dichte von 0,1 $g/cm^3$ bis 1,8 $g/cm^3$. Bei relevanten Fremdanteilen im silizium wie z.B. Eisen (Fe) können die Werte davon abweichen.

Nach gleichfalls bevorzugten Alternativen kann das Gewichtsverhältnis von Mangandioxid im Kathodenmaterial zum Elektrolyten von 2,2 bis 2,9 betragen. Alternativ oder gleichzeitig kann das Gewichtsverhältnis der Silizium-Partikel im Anodenmaterial zum Elektrolyt von 0,6 bis 1,7 betragen.

Ein besonders bevorzugtes Kathodenmaterial der Kathode umfasst zu 70 bis 95 Gew.-% als Kathodenmaterial Mangandioxid, insbesondere Battery Grade und bevorzugt eine Partikel-größe von kleiner gleich 10 Mikrometer, und einen Kohlenstoff enthaltenden Leitfähigkeits-vermittler, insbesondere von 5 bis 30 Gew.-% Leitfähigkeitsvermittler, und optional weitere Additive auf 100 Gew.-% des Kathodenmaterials. Der Leitfähigkeitsvermittler ist vorzugs-weise ein Kohlenstoff enthaltender Partikel, Mischung dieser oder eine Kohlenstoff enthaltende Paste.

Der Kohlenstoff enthaltende Leitfähigkeitsvermittler umfasst besonders bevorzugt

i) Kohlenstoff enthaltende Partikel, die umfassen Ruß, Leit-Ruß, elektrochemisch hergestellten bzw. behandelten. Ruß, Elektroruß, Aktivkohle, Graphit, Graphen und/oder eine Mischung davon, und/oder

ii) eine Kohlenstoff enthaltende Paste, die elektrisch leitfähige Polymere, die Heteroatome N, O und/oder S umfassen können, wie Polyanilin oder Graphen.

Es wurde gefunden, dass Elektroruß als Leitfähigkeitsvermittler wirksamer ist als Graphitpulver. Der hinreichende Anteil von Elektroruß im Anodenmaterial liegt vorzugsweise im Bereich von 50 bis 90 Gew.-% in Bezug auf die Gesamtzusammensetzung. Mit einer zwei Zellen umfassenden Batterie mit 16 $cm^2$ aktiver Elektrodenfläche könnte bereits eine Leistung ausreichend für den Betrieb eines kleinen Lüfters bereitgestellt werden.

In einer besonderen Variante der elektrochemischen Primärzelle liegt an der Kathode und/oder Anode vorzugsweise ein Druck von 0,01 bis 10 MPa an, bevorzugt von 0,5 bis 5,0 MPa, um das Pulvermaterial zu verdichten und den Innenwiderstand der Elektroden auf weniger 10 Ohm/cm zu reduzieren.

Gleichfalls Gegenstand der Erfindung ist eine mehrzellige Batterie wobei die Batterie mindestens zwei bis 15.000, insbesondere 3 bis 500, bevorzugt 4 bis 100, mit einander verbundene Primärzellen umfasst, vorzugsweise sind von den zwei bis 15.000 mit einander verbundenen Primärzellen 4 bis 100 in Serie, die weiteren entsprechend parallel geschaltet. Die Batterie wird definiert nach der DIN-Norm 40729.

Als Batterietypen kommen beispielsweise auch Hörgerätebatterien in Frage. Die Geometrie der Anode und/oder Kathode weist dann vorzugsweise eine Dimensionierung auf, dass sie in die Standard-Zylindergröße für A675, A13, A312 und/oder A10 passt.

**Ausführungsbeispiele:**

Der Betrieb von Silizium enthaltenden Primärzellen mit alkalischen, wässrigen Elektrolyten hat den wesentlichen Nachteil der Korrosion des Siliziums. Einerseits wird durch die Korrosion Wasserstoff freigesetzt und andererseits beginnt der Elektrolyt ab etwa einer Konzentration von 4M an SiliziumGehalt zu gelieren.

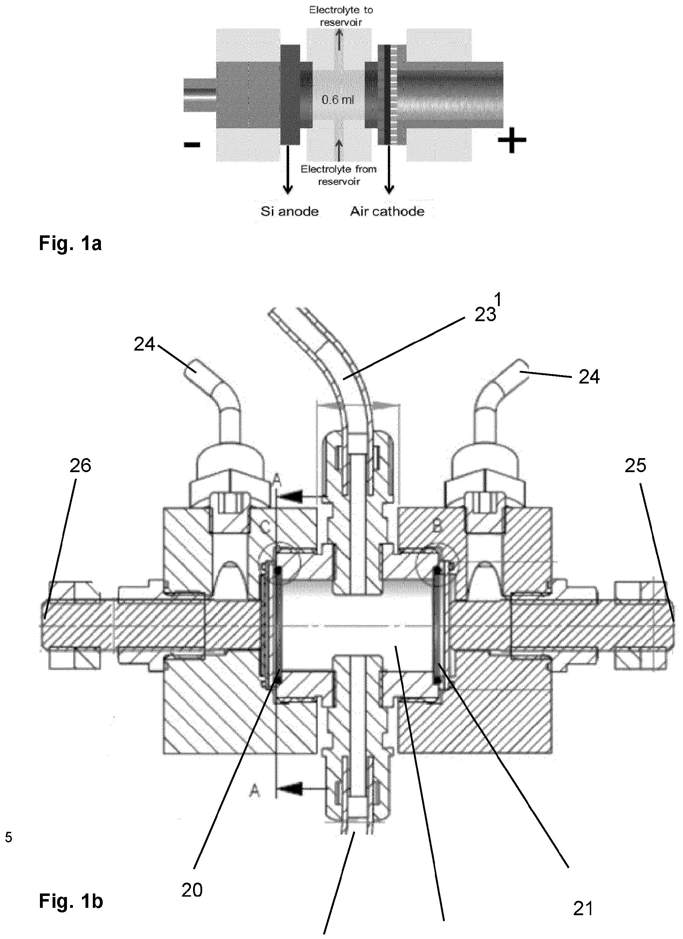

Der prinzipielle Aufbau der Primärzelle ist in Figur 1a dargestellt. Die Primärzelle weist eine Anode aus Silizium und eine Luftkathode auf. Zwischen Anode und Kathode ist ein Reservoir zur Aufnahme eines Elektrolyten von 0,6 ml vorgesehen. Fig. 1b stellt eine andere Zellanordnung einer Primärzelle dar auf die später eingegangen wird.

Figur 1b zeigt einen realen Aufbau der Versuchszelle: mit 20: Anode in Form einer Scheibe umfassend Siliziumpartikel als Pulver in einem Separator bzw. als gesinterte Scheibe aus Siliziumpartikeln. Alternative kann eine Silizium-Kohlenstoffpaste in den Anodenträger abgedeckt mit einem scheibenförmigen Separator eingesetzt werden, 21: Luftkathode, 22: Elektrolytreservoir (ca. 20 ml, ca. 6 cm$^2$ Anoden- bzw. Kathodenfläche); 23: Zu-/Ableitung Elektrolytflüssigkeit; 24: Zu-/Ableitung Inertgas (Argon und/oder $N_2$); 25: Stromabnehmer Kathode, 26: Stromabnehmer Anode.

Zur Vermeidung der Korrosion von Silizium wurden verschiedene Verbindungen auf ihre, die Korrosion von Silizium-Anoden inhibierenden Eigenschaften in einem alkalischen Elektrolyten ohne und mit Entladung untersucht, deren Ergebnisse in den folgenden Figuren dargestellt sind.

Batterieversuche **A**: Silizium-Anode, wässriger Elektrolyt mit Inhibitoren (dabei Siliziumwafer als Anode, 200 Mikrometer stark (Dicke), B-dotiert elektronisch (1 Bor/10$^6$ Si-Atome ~ entsprechend Teilchendichte von ~10$^{17}$ Teilchen/cm$^3$), wenn nicht anders angegeben:

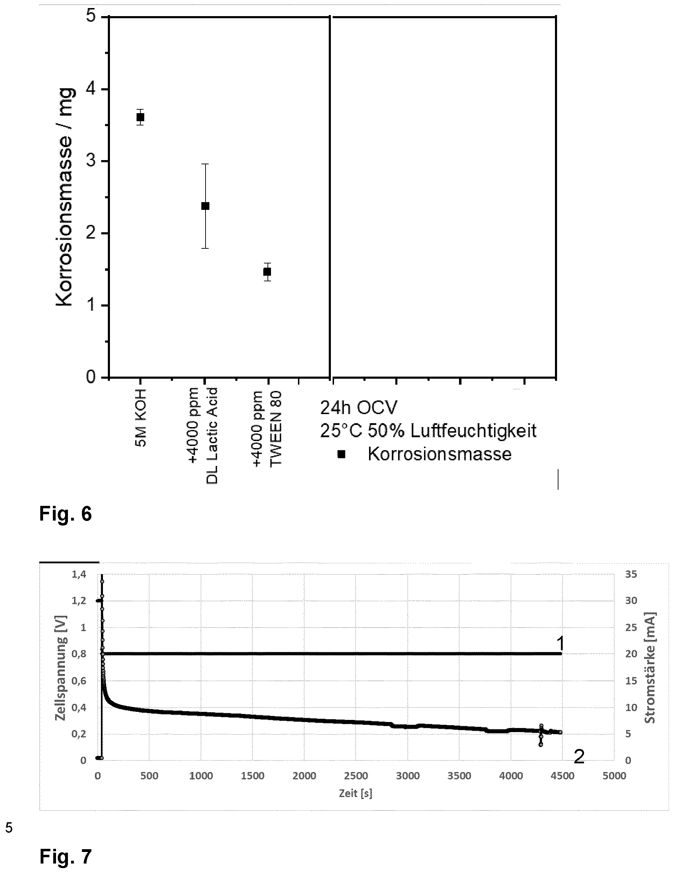

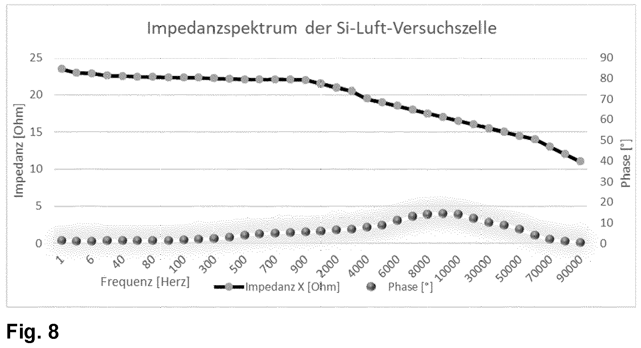

> i) Elektrolyt a) 5M KOH (ohne Additive) und
> i) Elektrolyt b) 5M KOH + 4000 Gew.-ppm D-/L-Milchsäure (DL-Lactic Acid 90)
> ii) V1 Ruß-Silizium-Pulver 1,8 Gew.-% Bor (Silizium-Partikeln (Partikelgröße um 0,1 Mikrometer, nanokristallin)) in Rundzelle, **Figur 7** zeigt die (eingeprägte) Zellspannung
> Kurve 1: 0,8 V Zellspannung unter Last über der Zeit, sowie zugehörig die Kurve 2 Stromstärke in Milliampere (mA) über der Versuchs-Zeit.
> iii) in einem weiteren Versuch wurde die Anode ersetzt: eine Anode mit gesinterten Siliziumpartikel fand Verwendung (Pressling/Tablette unter Verwendung von Si-Partikeln Größe um 0,1 Mikrometer, nanokristallin), Elektrodenabstand Anode von Kathode: 2 cm, Elektrolyt KOH 3 mol/L, 1 Gew.-% PEG 400, Rundzelle; an der Kathode: Begasung mit $O_2$ mit Volumenfluß 11 Normliter je Stunde (nL/h), Diese Anordnung wurde vermessen im Bereich 1 Hz bis 100 kHz der Wechselstromwiderstand (= Impedanz). Die Impedanz bleibt von 1 Hz bis etwa 1kHz nahezu konstant bei ~ 23 bis 20 Ohm. Bei höheren Wechselstromfrequenzen von 1 kHz bis 100kHz und zunehmender Phasenverschiebung nimmt der Widerstand deutlich ab, siehe **Figur 8.**

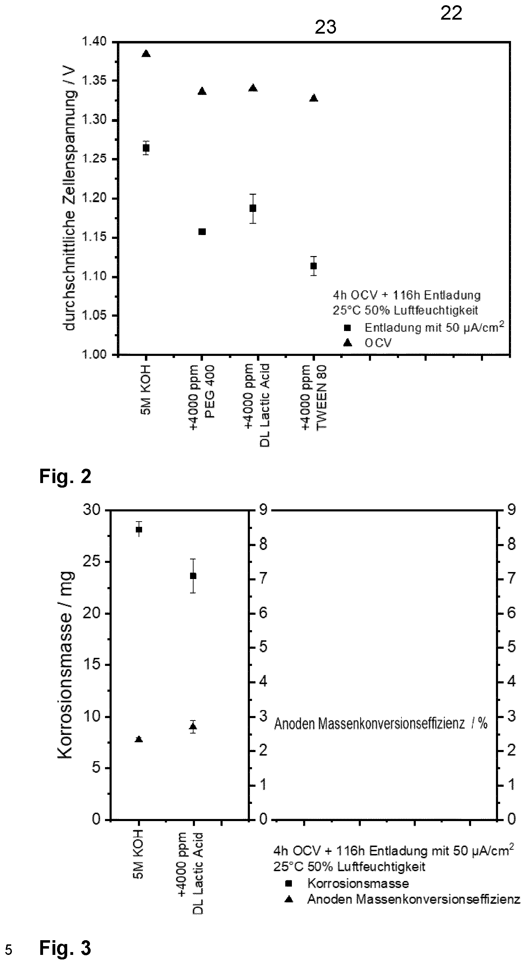

In den nachfolgenden Versuchen (Figur 2 bis Figur 6) wurde der Elektrolyt alle 4 Stunden jeweils für 5 Minuten mit einer Durchflussgeschwindigkeit von 0,1 mL/min ausgetauscht.

In den Figuren 2 bis 6 wird dargestellt die Zellspannung (V) einer Primärzelle (gemäß Fig. 1a) mit einem wässrigen Elektrolyten mit 5M KOH und den nachfolgend genannten Zusätzen an erfindungsgemäßen Verbindungen.

Messungen: offene Zellspannung (OCV: open circuit; Leerlaufspannung) und Entladung mit einer Stromdichte von 50 μA/cm$^2$ (25 °C, 50% rel. Luftfeuchtigkeit) in den Messungen der nachfolgenden Figuren. Die Zellspannung ist im Vergleich zu einem Elektrolyten mit reinem KOH mit Hydroxycarbonsäure vermindert. Die Figuren zeigen, dass die Korrosionsmasse vermindert wird und die Konversionseffizienz mit Hydroxycarbonsäure erhöht ist. Im jeweiligen Versuch wird während der Strommessung alle 4 Stunden für 5 Minuten der Elektrolyt mit einer Durchflussgeschwindigkeit von 0,1 mL/min ausgetauscht.

**Fig. 2**:   Zeigt die durchschnittliche Zellspannung in Abhängigkeit von der Elektrolytadditivierung über 120 Stunden Zellbetrieb: davon 4 Stunden Zellspannung im Leerlauf (OCV) und daran anschließend 116 Stunden Zellspannung unter konstanter Stromentnahme.

**Fig. 3**:   zeigt die Korrosionsmassen (linke Achse) sowie die dazugehörige Anoden Massenkonversionseffizienz in Prozent für die Zelle ohne Additive (5M KOH) sowie die Zelle additiviert mit 4000 ppm DL Lactic Acid. Die Versuchszellen wurden mit 50 μA/cm$^2$ für 116h (+4h OCV) entladen. Dabei ist m$_{corr}$: Massenverlust durch Korrosion m$_{tot}$: Gesamtmassenverlust durch Korrosion + Entladung m$_{dis}$: Massenverlust durch Entladung

$$\text{Anoden Massenkonversionseffizienz} = m_{dis}/(m_{dis} + m_{corr}) \cdot 100\%$$

$$m_{corr} = m_{tot} - m_{dis} = m_{tot} - \text{praktische Entladekapazität/theoretische Kapazität}$$

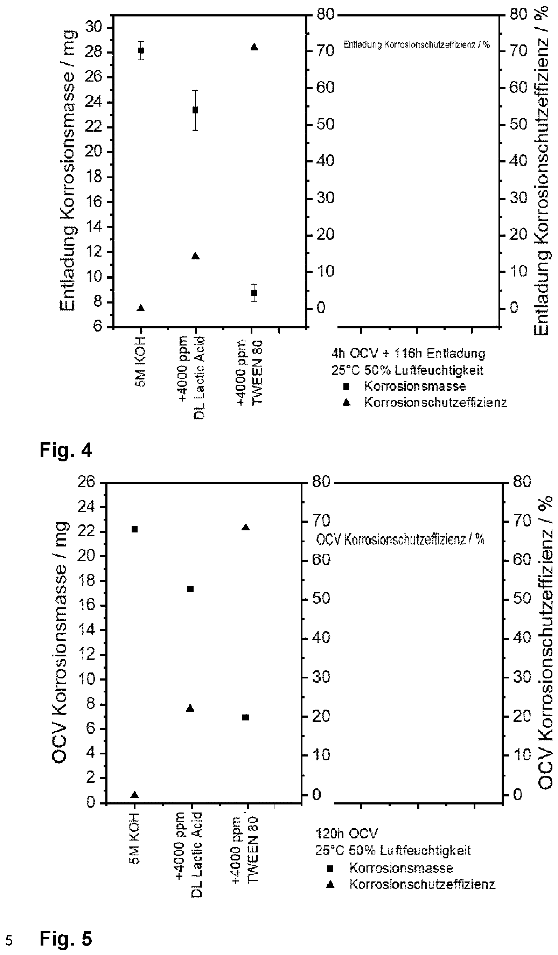

**Fig. 4:** zeigt die Korrosionsmassen (linke Achse) sowie die dazugehörige Anoden Korrosionsschutzeffizienz in Prozent für die Zelle ohne Additive (5M KOH) sowie die Zelle additiviert mit 4000 ppm DL Lactic Acid und 4000 ppm TWEEN 80. Die Versuchszellen wurden mit 50 $\mu$A/cm$^2$ für 116h (+4h OCV) entladen. Hinweis: es kann sich ein Fehler ergeben, da versuchsbedingt 4 Stunden OCV-Betrieb mit berücksichtigt wurden.

$$\text{Korrosionschutzeffizienz} \quad = (m_{(corr(5M\ KOH)} - m_{corr(inhibitor)}/m_{corr(5M\ KOH)} \cdot 100\%$$

$$= (\text{Korrosionsmasse für 5M KOH-Korrosionsmasse für}$$

$$\text{Inhibitor)/Korrosionsmasse für 5M KOH}$$

**Fig. 5:** Korrosionsmasse für die Zellen gemäß Figur 4, die über 120h im OCV aufbewahrt wurden (keine Entladung).

$$\text{Korrosionschutzeffizienz} \quad = (m_{(corr(5M\ KOH)} - m_{corr(inhibitor)}/m_{corr(5M\ KOH)} \cdot 100\%$$

$$= (\text{Korrosionsmasse für 5M KOH-Korrosionsmasse für}$$

$$\text{Inhibitor)/Korrosionsmasse für 5M KOH}$$

**Fig. 6:** 24h Korrosionsexperimente in einer Versuchszelle gemäß Figur 1a unter Wegfall der Kathode (sog. Halbzellenanordnung), kein Elektrolytwechsel oder Elektrolytfluss (stehender Elektrolyt).

**Fig. 7:** Versuchszelle gemäß Figur 1.b: V1 Pulver-Anode mit Ruß-Silizium-Pulver dotiert mit 1,8 Gew.-% Bor Rundzelle mit Separator, Kurve 1: Zellspannung eingeprägt (Belastung) 0,8 Volt (V) konstant über der Zeit, Kurve 2: zugehöriger Zell-Strom in Milliampere (mA)über die Zeit, Silizium-Partikeln (Partikelgröße um 0,1 Mikrometer, nanokristallin).

**Fig. 8:** Versuchszelle gemäß Figur 1b: Anode mit gesinterten Siliziumpartikel (Pressling/Tablette unter Verwendung von Si-Partikeln Größe um 0,1 Mikrometer, nanokristallin), Elektrodenabstand Anode von Kathode: 2 cm, Elektrolyt KOH 3 mol/L, 1 Gew.-% PEG 400, Rundzelle; an der Kathode: Begasung mit O$_2$ mit Volumenfluß 11 Normliter je Stunde (nL/h), Diese Anordnung wurde hinsichtlich Impedanzvektor nach Betrag und Phase über der Frequenz vermessen. Impedanz ist der Wechselstromwiderstand. Die Impedanz der Zelle bleibt von 1 Hz bis etwa 1kHz nahezu konstant bei ~ 23 bis 20 Ohm. Aus dem Impedanzspektrum kann der Fachmann u.a. die Qualität der Kontaktierungen (Überganswiderstände) und des Zellaufbaus ableiten.

Die Messung der durchschnittlichen Zellspannung gemäß **Figur 2** zeigt, dass mit Milchsäure (4000 ppm-Gew.) gegenüber einer Elektrolytlösung ohne Additiv (5 M KOH) für eine erfindungsgemäße Elektrolytzusammensetzung mit Milchsäure mit ca. 1,33 - 1,34 V eine etwa nur um 0,03 bis 0,06 V gegenüber der Elektrolytzusammensetzung ohne Additiv (reines wässriges 5 M KOH, ca. 1,37-1,39 V) verminderte OCV gemessen wird. Die Zellspannung für Milchsäure ist gegenüber der Zellspannung unter Belastung für PEG 400 und Tween 80 höher. Demgegenüber zeigt **Figur 3**, dass für Elektrolytzusammensetzungen mit Milchsäure eine geringe Korrosionsmasse gegenüber einer Elektrolytzusammensetzung (5 M KOH ohne Additiv) und damit eine verbesserte Anoden Massenkonversionseffizienz erzielt wird. Entsprechend bewirkt Milchsäure, wie in **Figur 4** dargestellt, eine verbesserte Korrosionsschutzeffizienz gegenüber einer Zusammensetzung ohne Milchsäure. Zwar ist die Korrosionschutzeffizienz von Tween 80 besser als für Milchsäure, doch für Milchsäure kann eine bessere Zellspannung unter Belastung erzielt werden. Ggf. kann mit einem Gemisch von Milchsäure und Tween 80 eine weitere Verbesserung erzielt werden. In **Figur 5** ist die über 120 Stunden im OCV Zustand ermittelte Korrosionsmasse gegenübergestellt. Im OCV Betrieb (**Fig. 6**) konnte durch Zugabe von Milchsäure die Korrosionsschutzeffizienz verbesserter werden. **Figur 8** zeigt den Impedanzvektor nach Betrag und Phase über der Frequenz. Bis 1 kHz ist der Verlauf nahezu konstant und ohmisch (Phasenwinkel ~0°). Die Impedanzmessung charakterisiert den Zellaufbau.

Der Impedanzvektor nach Betrag und Phase der Versuchszelle gemäß Figur 1b ist abhängig vom Elektrodenabstand (hier ~ 32 mm). An der Zelle wurde ein konstanter Gasfluss zur Luftkathode mit 11 Normliter Sauerstoff pro Stunde eingestellt und der Elektrolyt aus wässriger Kalilauge 3-molar additiviert mit 1 Vol.-% PEG-400. Das Impedanzspektrum der so betriebenen Zelle zeigt bis 1 kHz einen nahezu konstanten ohmschen Verlauf (Phase < 10°) mit einem Betrag von 22 Ohm.

**Batterieversuche B:**

Die nachfolgenden Tabellen stellen ebenfalls verwendete Proben von Silizium-Partikeln und des dort verwendeten Leitfähigkeitsvermittlers dar.

**Tabelle 1:** Röntgenamorphe Silizium-Partikel

| Silizium-Partikel | Primärpartikel [nm] | Agglomerate und/oder Aggregate [nm] | Dotierung | Si [Gew.-%] |
|---|---|---|---|---|
| A | 5-15 | 150-1000 | < 0,1 Gew.-ppm Intrinsischer Halbleiter | 99,99999 (electronic grade) |
| B | 100-300 | 200-2000 | < 10 Gew-ppm | Solar-grade 99,999 |
| C | 100-300 | 400-1000 | 1 Gew.-% Intrinsischer p-Leiter | 98,9 |
| D | 100 - 300 | 400 - 1000 | 1,8 Gew.-% Bor ($5 \cdot 10^{19}$/cm$^3$) | 98,19 |

**Tabelle 2:** Leitfähigkeitsvermittler enthaltend Kohlenstoff enthaltende Partikel

| Kohlenstoff enthaltende Partikel | Kohlenstoff enthaltende Partikel | Partikelgröße [nm] | Agglomerate und/ oder Aggregate [nm] | Dotierung |
|---|---|---|---|---|
| Vulcan-XC72R (Elektroruß) | | 20 bis 40 oder 25 bis 80 | 350 bis 1500 350 bis 1500 | < 100 Gew.-ppm n-Donoren und p-Akzeptoren |
| Graphit (Naturgraphit vermalen) | ca. 20% Fettanteil | 16000-63000 | Flocken, flockig | < 1 Gew.-% |

Mit den Siliziumpartikeln und den Kohlenstoffpartikeln wurden Elektrodenpasten hergestellt, die alternativ mit Bindemittel versetzt gepresst werden können.

**Batterieversuche B mit Hydroxycarbonsäuren und Siliziumpartikeln als Anodenmaterial.** Der Aufbau weiterer getesteter Primärzelle(n) **1** erfolgte gemäß **Figur 1b**

Auch in diesen Versuchszellen mit Anoden aus partikulärem Silizium konnte eine Inhibierung der Korrosion durch Zugabe von Hydroxycarbonsäure zum alkalischen Elektrolyten nachgewiesen werden.

Ferner konnte gezeigt werden, dass die Versuchszellen sich in Reihe schalten lassen und sich dabei die Zellspannungen addieren. Der Gesamt-Strom einer solchen Primärbatterie (mit Zellen in Serienschaltung) wird durch die Zelle bestimmt, die im Einzelbetrieb den geringsten Strom liefert.

**Patentansprüche**

1. Wässrige, alkalische Elektrolytzusammensetzung, **dadurch gekennzeichnet, dass** die Elektrolytzusammensetzung enthält

   - 2,0 bis 99,0 Gew.-% Wasser, und
   - 0,0001 bis 15 Gew.-% mindestens eine Hydroxycarbonsäure, Carboxylat einer Hydroxycarbonsäure, Ester einer Hydroxycarbonsäure, Ether eines Carboxylats einer Hydroxycarbonsäure, polymere Verbindungen basierend auf Hydroxycarbonsäuren, Carboxylaten von Hydroxycarbonsäure, Estern von Hydroxycarbonsäuren oder Gemisch enthaltend mindestens zwei der vorgenannten Verbindungen, und
   - einen Gehalt von 0,001 bis 40 Gew.-% Alkalihydroxid

   in Bezug auf die Gesamtzusammensetzung von 100 Gew.-%.

2. Elektrolytzusammensetzung nach Anspruch 1, **dadurch gekennzeichnet, dass** die Hydroxycarbonsäure ausgewählt ist aus Milchsäure, insbeondere D-Milchsäure, L-Milchsäure und/oder Gemische von D/L-Milchsäure, α-Hydroxycarbonsäuren, insbesondere Fruchtsäuren, insbesondere Äpfelsäure, Citronensäure, Fumarsäure, Gluconsäure, Glycolsäure, Mandelsäure, Milchsäure, Oxalsäure, Salicylsäure, α-Hydroxycaprylsäure und Weinsäure, β-Hydroxycarbonsäuren, insbesondere β-Hydroxybuttersäure und/oder Mevalonsäure, oder Gallussäure, 4-Hydroxybutansäure, Polyhydroxybuttersäure, Salicylsäure (2-Hydroxybenzoesäure), 4-Hydroxybenzoesäure (PHB) oder das Carboxylat von Hydroxycarbonsäure, Ester von Hydroxycarbonsäure, Ether von Carboxylat von Hydroxycarbonsäure auf mindestens einer der vorgenannten Hydroxysäuren basiert, und/oder die polymeren Verbindungen auf mindestens einer der Hydroxycarbonsäuren oder einem Gemisch enthaltend mindestens zwei der vorgenannten Verbindungen basiert.

3. Elektrolytzusammensetzung nach Anspruch 1 oder 2, **dadurch gekennzeichnet, dass** die Elektrolytzusammensetzung umfasst mindestens eine lineare oder verzweigte Polyalkylenoxid-Gruppen aufweisende Verbindung mit mindestens drei Alkylenoxid-Gruppen in der Verbindung oder Gemische von mindestens zwei dieser Verbindungen, wobei die Alkylenoxid-Gruppen in der Polyalkylenoxid-Gruppen aufweisenden Verbindung ausgewählt sind aus Alkylenoxid-Gruppen mit 2 bis 6 C-Atomen je Alkylenoxid-Gruppe, und, wobei mindestens eine terminale Gruppe der Polyalkylenoxid-Gruppen aufweisenden Verbindung ausgewählt ist aus Hydroxy-Gruppen, Alkyl-Gruppen, Alkoxy-Gruppen, Alkenyl-Gruppen, Alkenyloxid-Gruppen, Carbonsäure-Gruppe, Carbonsäureester-Gruppen, Carbonsäureamid-Gruppen, aromatischen-Gruppen und/oder Gruppen enthaltend cyclische-Ether.

4. Elektrolytzusammensetzung nach Anspruch 3, **dadurch gekennzeichnet, dass** mindestens eine terminale Gruppe der Polyalkylenoxid-Gruppen aufweisenden Verbindung eine Hydroxy-Gruppe ist und mindestens eine weitere terminale Gruppe ausgewählt ist aus Hydroxy-Gruppen, Alkyl-Gruppen, Alkoxy-Gruppen, Alkenyl-Gruppen, Alkenyloxid-Gruppen, Carbonsäureester-Gruppen, aromatischen-Gruppen, insbesondere Alkylfunktionalisierte Phenyl-Gruppen, besonders bevorzugt 4-(1,1,3,3-Tetramethylbutyl)-phenyl-polyethyleneglykol, bevorzugt 4-(1,1,3,3-Tetramethylbutyl)phenyl-polyethylene glycol, t-Octylphenoxypolyethoxyethanol, Polyethylene glycol tert-octylphenyl ether und/oder Gruppen enthaltend cyclische-Ether.

5. Elektrolytzusammensetzung nach Anspruch 3 oder 4, **dadurch gekennzeichnet, dass** die Hydroxycarbonsäuren ausgewählt sind aus Enantiomeren, Diastereomeren oder Gemischen dieser.

6. Elektrolytzusammensetzung nach einem der Ansprüche 1 bis 5, **dadurch gekennzeichnet, dass** sie Alkalihydroxid enthält, insbesondere Kaliumhydroxid.

7. Elektrolytzusammensetzung nach einem der Ansprüche 1 bis 6, **dadurch gekennzeichnet, dass** die Elektrolytzusammensetzung

   - 2,0 bis 99,0 Gew.-% Wasser,
   - 0,0001 bis 15 Gew.-% mindestens eine Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen,
   - einen Gehalt von 0,001 bis 40 Gew.-% Alkalihydroxid, und optional
   - 0,0001 bis 15 Gew.-% Polyalkylenoxid-Gruppen aufweisende Verbindungen oder Gemische dieser,

   in Bezug auf die Gesamtzusammensetzung von 100 Gew.-% enthält.

8. Elektrolytzusammensetzung nach einem der Ansprüche 1 bis 8, **dadurch gekennzeichnet, dass** sie enthält Wasser, insbesondere destilliertes Wasser, und eine Stoffmengenkonzentration von 1 bis 6 Mol/Liter Alkalihydroxid, insbesondere Kaliumhydroxid, und
   10 ppm-Gew. bis 50.000 ppm-Gew. mindestens eine Hydroxycarbonsäure, Carboxylat der Hydroxycarbonsäure, Ester der Hydroxycarbonsäure, Ether von Carboxylat der Hydroxycarbonsäure, polymere Verbindungen basierend auf Hydroxycarbonsäure oder Gemische enthaltend mindestens zwei der vorgenannten Verbindungen oder Gemische von mindestens zwei dieser Verbindungen aufweist.

9. Elektrochemische Primärzelle aufweisend eine Anode, eine Kathode sowie mindestens einen Separator und enthaltend eine Elektrolytlösung nach einem der Ansprüche 1 bis 8, wobei der Separator die Kathode und die Anode voneinander separiert.

10. Primärzelle nach Anspruch 9, **dadurch gekennzeichnet, dass**

i) das Material der Kathode der Primärzelle Mangandioxid und optional einen Kohlenstoff enthaltenden Leitfähigkeitsvermittler aufweist, wobei die Primärzelle in einem hermetisch abgeschlossen Gehäuse vorliegt, oder ii) die Kathode der Primärzelle eine Luftkathode ist und das Material der Kathode der Primärzelle Mangandioxid und optional einen Kohlenstoff enthaltenden Leitfähigkeitsvermittler aufweist, insbesondere weist die Luftkathode eine für Kohlendioxid undurchlässige Membran auf.

11. Primärzelle nach Anspruch 9 oder 10, **dadurch gekennzeichnet, dass** die Anode als Anodenmaterial Silizium umfasst, insbesondere wobei das Silizium in Form von Silizium-Partikeln vorliegt, und bevorzugt die Silizium-Primärpartikel eine Partikelgröße zwischen 1 nm bis 3000 nm aufweisen, und die Silizium-Primärpartikel optional im Wesentlichen amorph sind.

12. Primärzelle nach einem der Ansprüche 9 bis 11, **dadurch gekennzeichnet, dass** die Silizium-Partikel einen Gehalt an Bor von 10 Gew.-ppm bis 1,8 Gew.-% in Bezug auf die Gesamtzusammensetzung der Silizium-Partikel von 100 Gew.-% aufweisen.

13. Mehrzellige Batterie, **dadurch gekennzeichnet, dass** die Batterie mindestens zwei bis 15.000 mit einander verbundene Primärzellen nach einem der Ansprüche 9 bis 12 umfasst, vorzugsweise sind die zwei bis 15.000 mit einander verbundenen Primärzellen in Serie geschaltet.

14. Verwendung mindestens einer Hydroxycarbonsäure, Carboxylate der Hydroxycarbonsäure, Ester der Hydroxycarbonsäure, Ether der Carboxylate der Hydroxycarbonsäure, polymere Verbindung basierend auf Hydroxycarbonsäure oder Gemische enthaltend mindestens zwei der vorgenannten Verbindungen in einer Elektrolytzusammensetzung, insbesondere in einer wässrigen, alkalischen Elektrolytzusammensetzung in einer elektrochemischen Primärzelle, insbesondere wobei die Anode der Primärzelle Silizium enthält, das in Form von Silizium-Partikeln mit einer Partikelgröße zwischen 1 nm bis 3000 nm vorliegt.

Electrolyte to
reservoir

0.6 ml

Electrolyte from
reservoir

Si anode        Air cathode

**Fig. 1a**

**Fig. 1b**

**Fig. 2**

**Fig. 3**

Fig. 4

Fig. 5

**Fig. 6**

**Fig. 7**

**Fig. 8**

Europäisches
Patentamt

European
Patent Office

Office européen
des brevets

# EUROPÄISCHER RECHERCHENBERICHT

Nummer der Anmeldung

EP 22 15 8281

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H01 316499 A (DIPSOL CHEM) 21. Dezember 1989 (1989-12-21) | 1,2,5-8 | INV. H01M4/06 H01M4/24 H01M4/38 H01M4/50 H01M4/62 |
| Y | * Zusammenfassung * * Beispiel 1 * ----- | 3,4,9-14 | |
| Y | DURMUS YASIN EMRE ET AL: "Long run discharge, performance and efficiency of primary Silicon-air cells with alkaline electrolyte", ELECTROCHIMICA ACTA, ELSEVIER, AMSTERDAM, NL, Bd. 225, 21. Dezember 2016 (2016-12-21), Seiten 215-224, XP029911334, ISSN: 0013-4686, DOI: 10.1016/J.ELECTACTA.2016.12.120 | 3,4,9-14 | |
| A | * Zusammenfassung * * Absätze [02.1] - [02.3] * ----- | 1,2,5-8 | |
| A | BANSAL RISHABH ET AL: "Silicon-air batteries: progress, applications and challenges", SN APPLIED SCIENCES, Bd. 2, Nr. 6, 1. Juni 2020 (2020-06-01), Seite 1141, XP055964258, ISSN: 2523-3963, DOI: 10.1007/s42452-020-2925-7 Gefunden im Internet: URL:https://link.springer.com/content/pdf/10.1007/s42452-020-2925-7.pdf> * Zusammenfassung * * Absatz [4.2.3] * * Absätze [03.1] - [03.3] * ----- -/-- | 1-14 | |

RECHERCHIERTE SACHGEBIETE (IPC)

H01M

Der vorliegende Recherchenbericht wurde für alle Patentansprüche erstellt

| Recherchenort | Abschlußdatum der Recherche | Prüfer |
|---|---|---|
| München | 12. Oktober 2022 | Stachowiak, Olaf |

Seite 1 von 2

Europäisches
Patentamt

European
Patent Office

Office européen
des brevets

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ZHONG XING ET AL: "High-Capacity Silicon-Air Battery in Alkaline Solution", CHEMSUSCHEM, Bd. 5, Nr. 1, 9. Januar 2012 (2012-01-09), Seiten 177-180, XP055964441, DE ISSN: 1864-5631, DOI: 10.1002/cssc.201100426 * Zusammenfassung * * Absätze [0177] - [0178] * ----- | 1-14 | |
| A | DURMUS YASIN EMRE ET AL: "Investigation of the corrosion behavior of highly As-doped crystalline Si in alkaline Si-air batteries", ELECTROCHIMICA ACTA, Bd. 265, 1. März 2018 (2018-03-01), Seiten 292-302, XP055965765, AMSTERDAM, NL ISSN: 0013-4686, DOI: 10.1016/j.electacta.2018.01.145 * das ganze Dokument * ----- | 1-14 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 12. Oktober 2022 | Stachowiak, Olaf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 8281

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2022

| Im Recherchenbericht angeführtes Patentdokument | Datum der Veröffentlichung | Mitglied(er) der Patentfamilie | Datum der Veröffentlichung |
|---|---|---|---|
| JP H01316499 A | 21-12-1989 | JP 2671013 B2<br>JP H01316499 A | 29-10-1997<br>21-12-1989 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DAVID R. BLACK ; DONALD WINDOVER ; ALBERT HENINS ; DAVID GIL ; JAMES FILLIBEN ; JAMES P. CLINE.** Standard Reference Material 640d for X-Ray Metrology. National Institute of Standards and Technology